# EUROPEAN PATENT APPLICATION

(11) **EP 4 473 820 A1**
(43) Date of publication of application: **11.12.2024**
(21) Application number: 23791906.3
(22) Date of filing: 19.04.2023
(51) Int. Cl.: A01C 11/00, A01G 33/00

(54) **UNDERWATER PLANTING MACHINE, UNDERWATER PLANTING SYSTEM, AND UNDERWATER PLANTING METHOD**

(30) Priority: 19.04.2022 JP 2022069072
(71) Applicant: Komatsu Ltd., Minato-ku Tokyo 107-8414 (JP)
(72) Inventor: TOGASHI Ryoichi, Tokyo 107-8414 (JP); UENO, Mitsuru, Tokyo 107-8414 (JP)
(74) Representative: Global IP Europe Patentanwaltskanzlei
(86) International application number: PCT/JP2023/015678
(87) International publication number: WO 2023/204258

(57) **Abstract**

An underwater planting machine includes: a main body; a planting device which installs a planting member having algae or aquatic plants fixed thereto to dispose the algae or aquatic plants at a predetermined position on a water bottom; a traveling device which causes the main body and the planting device to travel; and a power source which drives the traveling device, wherein the planting device disposes the planting member at a predetermined position on the water bottom while being moved by the traveling device.

## Description

### TECHNICAL FIELD

The present invention relates to an underwater planting machine, an underwater planting system, and an underwater planting method.

Priority is claimed on Japanese Patent Application No. 2022-069072, filed April 19, 2022, the content of which is incorporated herein by reference.

### BACKGROUND ART

For example, Patent Document 1 discloses an underwater bulldozer device that performs various operations such as digging, pushing up, and leveling a water bottom. This underwater bulldozer device uses a winch or other equipment mounted on a barge to store and prepare an underwater bulldozer when work is completed.

### RELATED ART DOCUMENT

### PATENT DOCUMENT

[Patent Document 1]
Japanese Examined Utility Model Application, Second Publication No. S51-24083

### SUMMARY

### PROBLEMS TO BE SOLVED BY THE INVENTION

By the way, efforts are being made to reduce carbon dioxide from the atmosphere as a measure against global warming. Plants absorb carbon dioxide from the atmosphere and thus contribute to preventing global warming, but afforestation on land alone is not enough to absorb carbon dioxide. As a result, attention has been focused on seaweed and seagrass, which absorb more carbon dioxide than living trees on land. However, if a worker manually plants seaweed, seagrass, or the like, it takes time and effort.

Therefore, an object of the present invention is to provide an underwater planting machine, an underwater planting system, and an underwater planting method capable of arranging algae or aquatic plants on a water bottom without any effort on a worker.

### MEANS FOR SOLVING THE PROBLEM

An underwater planting machine according to an aspect of the present invention includes: a main body; a planting device which installs a planting member having algae or aquatic plants fixed thereto to dispose the algae or aquatic plants at a predetermined position on a water bottom; a traveling device which causes the main body and the planting device to travel; and a power source which drives the traveling device, wherein the planting device disposes the planting member at a predetermined position on the water bottom while being moved by the traveling device.

### ADVANTAGE OF THE INVENTION

According to the above aspect, algae or aquatic plants can be disposed on the water bottom without any effort on a worker.

### BRIEF DESCRIPTION OF THE DRAWINGS

FIG. 1 is a perspective view of an underwater planting machine according to a first embodiment.
FIG. 2 is a schematic view of an underwater planting system according to the first embodiment.
FIG. 3 is a block diagram of the underwater planting system according to the first embodiment.
FIG. 4 is a schematic view of an underwater planting machine according to a second embodiment.
FIG. 5 is a diagram showing an example of a planting device.
FIG. 6 is a diagram showing an example of leveled area formed by an underwater working machine.
FIG. 7 is a diagram showing an example of leveled area formed by the underwater working machine.

### DESCRIPTION OF THE EMBODIMENTS

Embodiments of the present invention will be described below with reference to the drawings. In the embodiment, as an example of an underwater planting system including an underwater planting machine, an example will be described in which a device for delivering a planting member having algae fixed thereto is applied to an underwater vehicle to dispose algae on the water bottom. In embodiments, the water bottom is the ocean floor. In embodiments, the algae is seaweed, such as kelp or wakame.

### <First embodiment>

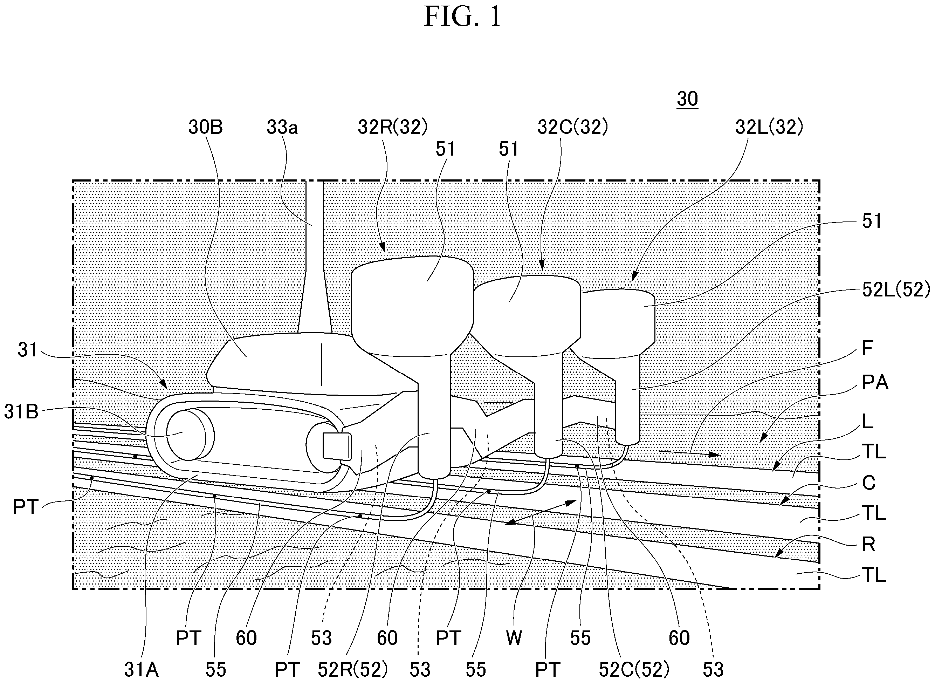

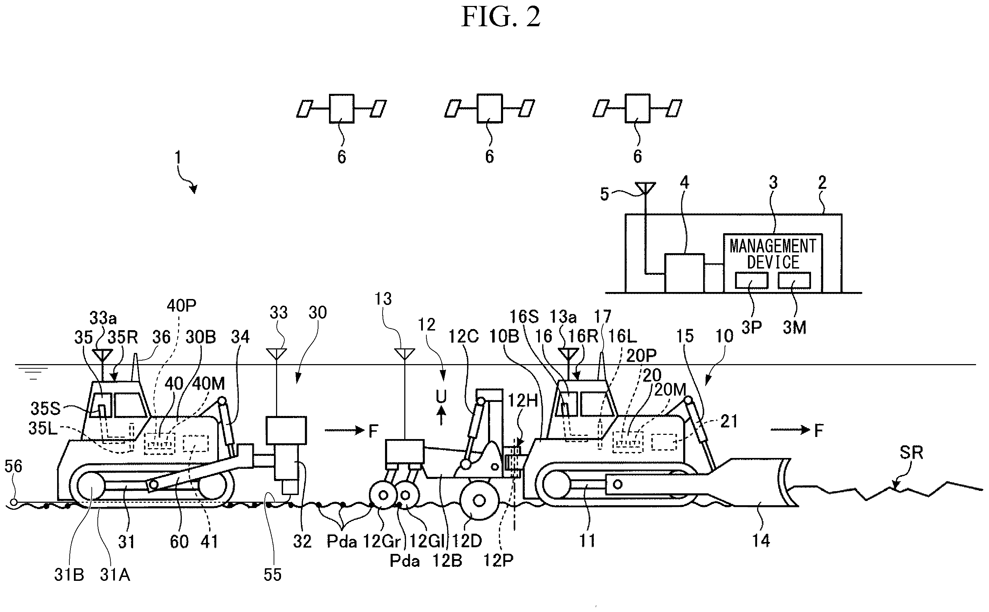

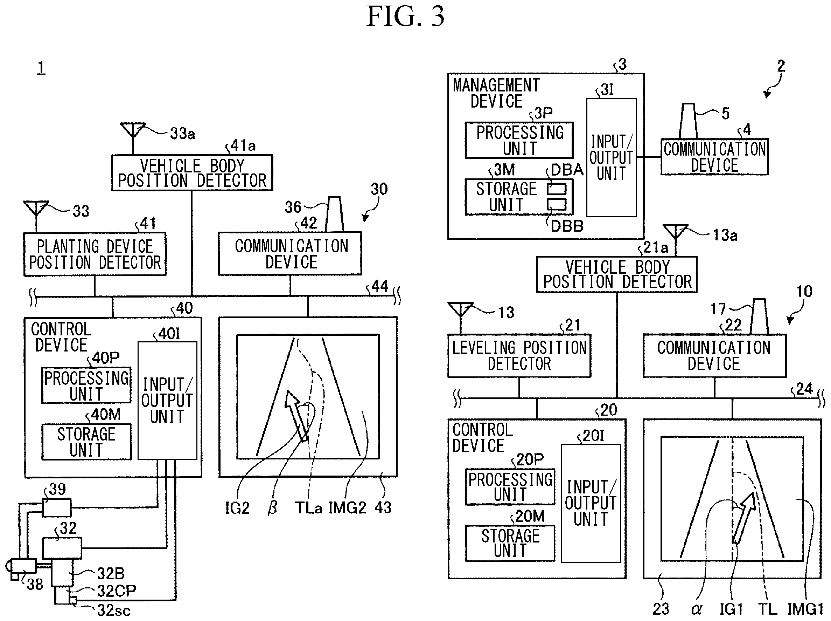

FIG. 1 is a perspective view of an underwater planting machine 30 according to a first embodiment. FIG. 2 is a schematic view of an underwater planting system 1 according to the first embodiment. FIG. 3 is a block diagram of the underwater planting system 1 according to the first embodiment.

For example, at a planting planning stage, a plurality of (three in the illustrated example) planting target lines TL that extend in parallel to each other are set in a planting area PA.

The interval between the adjacent planting target lines TL is, for example, about 3 m to 5 m, but is not limited thereto. The length of a planting target line TL may range from several hundred meters to several kilometers, but is not limited thereto. For example, the planned planting target line TL may be stored in advance in a storage unit 3M of a management device 3, a storage unit 20M of an underwater working machine 10, and a storage unit 40M of the underwater planting machine 30.

### <Underwater planting system>

The underwater planting system 1 includes the management device 3 which manages a planting target position, the underwater working machine 10 which levels the water bottom, and the underwater planting machine 30 which installs a plating member having algae PT fixed thereto on the water bottom. In the underwater planting system 1, an actual leveling position Pda indicating the position of the water bottom leveled by the underwater working machine 10 (hereinafter, also referred to as "leveled area") is set as a target when the underwater planting machine 30 delivers a planting member 55 to the leveled area. For example, the algae PT includes spores of algae such as kelp or wakame. Furthermore, in the underwater planting system 1, the underwater working machine 10 is not an essential component. For example, the underwater planting system can dispose planting members on the water bottom without leveling the water bottom. For example, the configuration of the underwater planting system can be changed depending on required specifications.

### <Underwater working machine>

For example, the underwater working machine 10 is an underwater bulldozer. The underwater working machine 10 levels the unleveled area SR that has not been leveled for installing planting members along the planting target line TL. The underwater working machine 10 includes an underwater work traveling device 11, an underwater working device 12, and a leveling position detector 21. The underwater work traveling device 11 causes the underwater working machine 10 to travel. For example, the underwater work traveling device 11 travels by transmitting power from a power source such as an internal combustion engine or an electric motor to crawler tracks, but is not limited to such a device. For example, the underwater work traveling device 11 may travel by transmitting power from a power source to its wheels.

In the underwater working machine 10, the direction from a driver seat 16S in a cabin 16 toward an operating device 16L is the front or forward direction. The rear or back of the underwater working machine 10 is the direction from the operating device 16L to the driver seat 16S. The left and right sides of the underwater working machine 10 are based on the front. The width direction of the underwater working machine 10 is a direction orthogonal to the direction from the driver seat 16S toward the operating device 16L and the height direction (up and down direction) of the underwater working machine 10. For example, the underwater working machine 10 may be configured to be operable remotely.

The underwater working machine 10 has a blade 14 on the front side in the traveling direction F. The underwater working machine 10 has the underwater working device 12 on the rear side in the traveling direction F. The blade 14 is a device that removes driftwood, discarded artifacts/garbage, rocks, and the like remaining on the unleveled area SR. The underwater working device 12 levels the unleveled area SR. Accordingly, a leveled water bottom (leveled area) is formed to install the planting member having the algae PT fixed thereto. The underwater working machine 10 removes rocks and the like remaining on the unleveled area SR with the blade 14 while traveling toward the traveling direction F along the planting target line TL and forms a leveled area using the underwater working device 12.

The underwater working device 12 includes a main body 12B, a crushing disk 12D, leveling disks 12Gl and 12Gr, and a hydraulic cylinder 12C. The crushing disk 12D, the leveling disks 12Gl and 12Gr, and the hydraulic cylinder 12C are attached to the main body 12B. For example, the crushing disk 12D is disposed on the front side of the leveling disks 12Gl and 12Gr. For example, the crushing disk 12D has a disk shape larger than the leveling disks 12Gl and 12Gr. The crushing disk 12D crushes rocks and the like remaining on the unleveled area SR while rotating as the underwater working device 12 moves. For example, rocks and the like may be crushed into even smaller pieces as a plurality of small leveling disks 12Gl and 12Gr pass through the route that the crushing disk 12D passed.

The leveling disks 12Gl and 12Gr form a leveled area by leveling the unleveled area SR passed by the crushing disk 12D while rotating as the underwater working device 12 moves. For example, the underwater working device 12 includes two leveling disks 12Gl and 12Gr. Furthermore, the number of leveling disks 12Gl and 12Gr is not limited to two, but can be changed according to the required specifications. The hydraulic cylinder 12C presses the main body 12B against the unleveled area SR.

In the example of FIG. 1, three planting target lines TL are shown. For example, in this case, three sets of one crushing disk 12D and the plurality of leveling disks 12Gl and 12Gr may be provided. For example, the number of sets of each disk may be set according to the number of planting target lines TL. For example, the number of sets of each disk can be changed depending on required specifications.

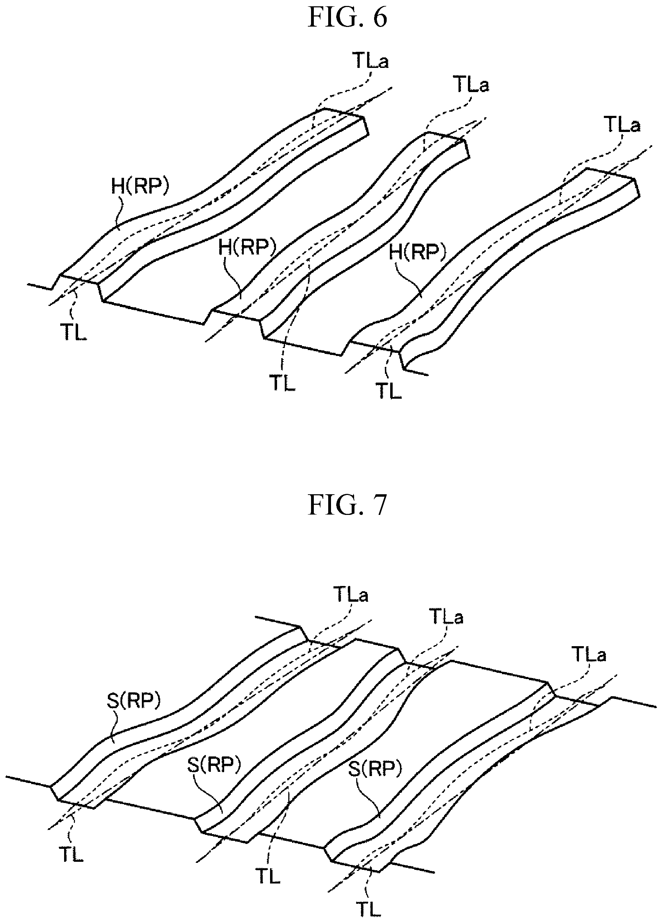

Here, an example of a leveled line (leveled area) formed by the underwater working machine 10 will be described. In the example of FIG. 6, ridges H extending in a line shape are shown. For example, the underwater working machine 10 may form the ridges H along the planting target line TL as the leveled area RP. In the example of FIG. 7, grooves S extending in a line shape are shown. For example, the underwater working machine 10 may form the grooves S along the planting target line TL as the leveled area RP. Furthermore, the leveled area RP is not limited to the ridges H or the grooves S. For example, the configuration of the leveled area can be changed depending on required specifications.

The main body 12B of the underwater working device 12 is attached to a vehicle body 10B of the underwater working machine 10 via a connection mechanism 12H. The connection mechanism 12H includes a pin 12P extending along an axis parallel to the up and down direction of the vehicle body 10B. The connection mechanism 12H connects the underwater working device 12 and the vehicle body 10B using the pin 12P. With such a structure, the underwater working device 12 rotates about the pin 12P. Therefore, the underwater working device 12 can rotate left and right with respect to the vehicle body 10B. The position of the underwater working device 12 in the height direction U can be adjusted by the hydraulic cylinder 12C.

Since the underwater working device 12 can rotate left and right with respect to the vehicle body 10B of the underwater working machine 10, the underwater working device can follow the shape of the unleveled area SR that will form the leveled area from now on. Places where planting members having the algae PT fixed thereto are installed are often wastelands where driftwood, discarded artifacts/trash, rocks, and the like exist. Therefore, since the underwater working device 12 can rotate in the left and right direction with respect to the vehicle body 10B, it is possible to suppress problems from occurring in the underwater working device 12 due to remaining driftwood, discarded artifacts/garbage, rocks, and the like.

The underwater working machine 10 includes a control device 20, a leveling position detection antenna 13, a leveling position detector 21, a vehicle body position detection antenna 13a, and a vehicle body position detector 21a. The leveling position detector 21 uses the leveling position detection antenna 13 to obtain and output the actual leveling position Pda which is a position corresponding to the position of the underwater working device 12. For example, the continuum of the actual leveling position Pda becomes an actual leveling line TLa. For example, if there are three planting target lines TL, three underwater working devices corresponding to these may be arranged. For example, in this case, a line having a predetermined width passed by the underwater working devices may be used as the actual leveling line by specifying the positions of three underwater working devices at predetermined intervals.

While the underwater working device 12 travels together with the underwater work traveling device 11 to level the unleveled area SR, the leveling position detector 21 obtains and outputs the plurality of actual leveling positions Pda. Here, the plurality of actual leveling positions Pda are a plurality of actual leveling positions for forming one actual leveling line TLa. The actual leveling position Pda is a position after leveling by the underwater working device 12, and is a reference position to dispose the algae PT. For example, the actual leveling position Pda may be formed by each of the plurality of leveling disks 12Gl and 12Gr or may be formed by one crushing disk 12D. The actual leveling position Pda output by the leveling position detector 21 of the algae planting target location is transmitted to the management device 3 and stored in the storage unit 3M included in the management device 3. For example, the algae planting target location is a location that includes a pinpoint location where algae is planned to be disposed, and includes a location that is planned to become the actual leveling position Pda.

The locus of the actual leveling position Pda as the underwater working machine 10 moves becomes a line shape. When the underwater working machine 10 moves along the planting target line TL, the locus of the actual leveling position Pda is also formed along the planting target line TL. Hereinafter, the locus of the actual leveling position Pda formed in a line shape will be referred to as the actual leveling line TLa. The storage unit 3M of the management device 3 stores the actual leveling position Pda or the actual leveling line TLa.

The underwater working machine 10 includes a hydraulic cylinder 15 for raising and lowering the blade 14, the cabin 16, and a communication antenna 17. The hydraulic cylinder 15 is an actuator for raising and lowering the blade 14. The cabin 16 is disposed above the underwater work traveling device 11 (on the side in the direction away from the ground plane of the underwater work traveling device 11).

For example, the underwater work traveling device 11 may be an unmanned vehicle that operates automatically using Real Time Kinematic - Global Navigation Satellite Systems (RTK-GNSS, GNSS means global navigation satellite system), inertial navigation, and the like. In this case, the control device 20 of the underwater working machine 10 causes the underwater working machine 10 to travel along the planting target line TL using the position of the own vehicle obtained by GNSS and Inertial Measurement Unit (IMU) or the position of the own vehicle obtained by inertial navigation. For example, the underwater working machine 10 may be made to travel along the target travel line determined based on the target planting line (for example, the planting target line TL) using the position of the own vehicle measured by GNSS or inertial navigation.

Furthermore, the cabin 16 may be a room in which an operator of the underwater working machine 10 boards and operates the underwater working machine 10. For example, the underwater working machine 10 may be a manned vehicle.

The communication antenna 17 is a device for the underwater working machine 10 to communicate with the management device 3. For example, the communication antenna 17 is attached to a roof 16R of the cabin 16. Furthermore, the location where the communication antenna 17 is attached is not limited to the roof 16R, and can be changed according to the required specifications.

The leveling position detection antenna 13 is a device for the leveling position detector 21 to obtain the actual leveling position Pda of the water bottom leveled by the underwater working device 12. The leveling position detector 21 obtains the actual leveling position Pda by, for example, GNSS. The leveling position detector 21 acquires a signal corresponding to the GNSS radio waves received by the leveling position detection antenna 13 from a positioning satellite 6. The leveling position detector 21 obtains the actual leveling position Pda based on a signal corresponding to the received GNSS radio waves.

The vehicle body position detection antenna 13a is a device for the vehicle body position detector 21a to obtain the position of the vehicle body 10B of the underwater working machine 10. The vehicle body position detection antenna 13a is provided in the vehicle body 10B. Since the method of obtaining the position of the vehicle body 10B by the vehicle body position detection antenna 13a is the same as the method of obtaining the actual leveling position Pda by the leveling position detection antenna 13, detailed description will be omitted.

Furthermore, the underwater working machine 10 may not include both the leveling position detection antenna 13 and the vehicle body position detection antenna 13a. For example, if the relative positional relationship between the leveling position by the underwater working device 12 and the vehicle body 10B can be detected, any one of the leveling position detection antenna 13 and the vehicle body position detection antenna 13a may be omitted. The control device 20 may obtain the actual leveling position Pda or the position of the vehicle body 10B from the position information obtained by the other of the leveling position detection antenna 13 and the vehicle body position detection antenna 13a. In this case, the position detector corresponding to the omitted position detection antenna can also be omitted. The actual leveling position Pda and the position of the vehicle body 10B are expressed by, for example, two-dimensional coordinates expressed in a global coordinate system, but these may also be expressed by three-dimensional coordinates.

Next, an example of a control system related to the underwater working machine 10 will be described.

The underwater working machine 10 includes the control device 20, the leveling position detector 21, the vehicle body position detector 21a, a communication device 22, and a display device 23. The components of the underwater working machine 10 are connected to related components via a signal line 24. The components of the underwater working machine 10 can exchange information with related components via the signal line 24. The signal line 24 is, for example, a signal line of an in-vehicle Local Network System (LAN) based on a standard such as Controller Area Network (CAN).

The control device 20 includes a processing unit 20P which is a processor such as a Central Processing Unit (CPU), the storage unit 20M such as a Random Access Memory (RAM), a Read Only Memory (ROM), and a combination thereof, and an input/output unit 20I. The processing unit 20P controls the operation of the underwater working machine 10. The storage unit 20M stores computer programs for realizing the functions of the processing unit 20P and information necessary for processing by the processing unit 20P. The input/output unit 20I is an interface circuit between the control device 20 and other devices.

The leveling position detector 21 obtains the position of the leveling position detection antenna 13 (that is, the actual leveling position Pda) by acquiring a signal according to the GNSS radio waves received by the leveling position detection antenna 13. The leveling position detector 21 transmits the obtained actual leveling position Pda to the management device 3 via the communication device 22 and the communication antenna 17. The management device 3 stores the actual leveling position Pda in the storage unit 3M.

For example, the leveling position detector 21 may acquire a signal corresponding to the GNSS radio waves received by the leveling position detection antenna 13 from the positioning satellite 6 at a predetermined period and obtain the actual leveling position Pda based on the acquired signal. In this case, the actual leveling position Pda can be obtained at a predetermined period. For example, if the predetermined period is 100 ms, ten actual leveling positions Pda are obtained per second.

For example, one actual leveling position Pda is a limited leveled area (point), but is not limited thereto. For example, the size of one actual leveling position Pda may be a circle with a diameter of about 1 m. For example, some aquatic plants are planted on the water bottom rather than algae that are permanently fixed to a predetermined position of the planting member. For example, aquatic plants include seagrass such as eelgrass that take root on the water bottom. In this case, , the size of one actual leveling position Pda may be a circle with a diameter of several mm to several meters in consideration of the thickness of the aquatic plants to be planted at the time of planting on the water bottom, the thickness after growth, and the like, but is not limited thereto. For example, if the purpose is to finally specify a line having a predetermined width called the actual leveling line TLa, the shape of one actual leveling position Pda may be a rectangular area. For example, the size and shape of one actual leveling position Pda can be changed depending on required specifications.

A plurality of the actual leveling positions Pda can be obtained while the underwater working machine 10 is traveling. Since the actual leveling line TLa is a set of multiple actual leveling positions Pda, there is a part where no actual leveling position Pda exists. Here, the part where no actual leveling position Pda exists is a part other than the part where the actual leveling positions Pda exist on a predetermined line when the actual leveling positions Pda exist intermittently along a predetermined line (for example, the planting target line TL). The value of the part where no actual leveling position Pda exists may be obtained, for example, by interpolating the values of two adjacent actual leveling positions Pda and Pda. In this way, the actual leveling line TLa can be obtained from the plurality of actual leveling positions Pda.

For example, the control device 20 may store the actual leveling position Pda within a predetermined period in the storage unit 20M. In this case, the control device 20 may read the actual leveling position Pda stored in the storage unit 20M after a predetermined time elapses and transmit the actual leveling position to the management device 3 via the communication device 22 and the communication antenna 17. The predetermined period may be, for example, a period until the underwater working machine 10 completes the leveling work from end to end of the planting area PA along one planting target line TL, but is not limited thereto.

For example, the control device 20 stores the position of the leveling position detection antenna 13 (that is, the position of the leveled area) obtained by the leveling position detector 21 in the storage unit 20M. When the formation work of the leveled area by the underwater working machine 10 is completed, the control device 20 may read the position of the leveled area acquired from the start to the end of the formation work from the storage unit 20M and transmit the position to the management device 3 via the communication device 22 and the communication antenna 17.

The display device 23 may be provided within the cabin 16. The display device 23 displays a guidance screen IMG1. The guidance screen IMG1 displays a deviation α between a traveling direction IG1 of the underwater working machine 10 and the planting target line TL. The planting target line TL is set in advance during the planting plan. For example, the planting target line TL may be stored in the storage unit 20M of the underwater working machine 10. For example, the planting target line TL may be stored in the storage unit 3M of the management device 3 and acquired from the management device 3 via the communication devices 4 and 22.

For example, the underwater working machine 10 may perform control so that the deviation α displayed on the guidance screen IMG1 becomes 0 by the automatic operation. For example, the traveling direction of the underwater working machine 10 may be changed by automatically operating the operating device 16L of the underwater working machine 10.

The control device 20 can obtain the traveling direction IG1 of the underwater working machine 10 from the position of the vehicle body 10B obtained by the vehicle body position detector 21a. For example, the control device 20 may obtain the traveling direction IG1 of the underwater working machine 10 also using IMU. The control device 20 obtains the traveling direction IG1 of the underwater working machine 10 and obtains the deviation α between the planting target line TL read from the storage unit 20M and the traveling direction IG1. The control device 20 displays the planting target line TL, the obtained deviation, and the traveling direction IG1 on the display device 23 as the guidance screen IMG1.

### <Management device>

The management device 3 is installed within a management facility 2. The management device 3 includes a processing unit 3P which is a processor such as CPU, the storage unit 3M such as a RAM, a ROM, and a combination thereof, and an input/output unit 3I. The processing unit 3P manages information received from the underwater working machine 10 and the underwater planting machine 30. The processing unit 3P manages information transmitted to the underwater working machine 10 and the underwater planting machine 30.

A communication device 4 is connected to the input/output unit 3I of the management device 3. The management device 3 communicates with the underwater working machine 10 and the underwater planting machine 30 via an antenna 5 of the communication device 4. The management device 3 stores at least one of the actual leveling position Pda and the actual leveling line TLa acquired from the underwater working machine 10 via the communication device 4 in the storage unit 3M. For example, the management device 3 transmits at least one of the actual leveling position Pda and the actual leveling line TLa stored in the storage unit 3M to the underwater planting machine 30 in response to the request from the underwater planting machine 30. For example, the management device 3 transmits the planting target line TL stored in the storage unit 3M to the underwater working machine 10 and the underwater planting machine 30.

For example, the communication of the management device 3 with respect to the underwater working machine 10 and the underwater planting machine 30 is wireless communication. Furthermore, information exchange in the underwater planting system 1 is not limited to wireless communication. Information may be exchanged in the underwater planting system 1 by wired communication or by a storage medium such as a Universal Serial Bus (USB) memory.

At least one of the actual leveling position Pda and the actual leveling line TLa transmitted from the underwater working machine 10 may be stored in the storage unit 3M, for example, as the first database DBA. When the underwater planting machine 30 transmits the actual planting position to the management device 3, the actual planting position may be stored in the storage unit 3M, for example, as the second database DBB.

### <Underwater planting machine>

The underwater planting machine 30 is operated along the plurality of actual leveling positions Pda or the actual leveling line TLa to perform planting work along the plurality of actual leveling positions Pda or the actual leveling line TLa. The actual leveling position Pda is an example of a managed plating position (the planting target position of the planting member 55). The underwater planting machine 30 includes a planting device 32, a planting traveling device 31, a planting device position detector 41, and a control device 40.

The planting traveling device 31 causes the vehicle body 30B of the underwater planting machine 30 and the planting device 32 to travel. The planting traveling device 31 includes a pair of crawler tracks 31A, a sprocket 31B, an idler, and the like. The planting traveling device 31 travels by rotating the pair of crawler tracks 31A in accordance with the drive of the sprocket 31B. For example, the planting traveling device 31 travels by transmitting power from a power source such as an internal combustion engine or an electric motor to crawler tracks, but is not limited to such a device. For example, the planting traveling device 31 may travel by transmitting power from a power source to wheels.

In the underwater planting machine 30, the direction from a driver seat 35S in a cabin 35 toward an operating device 35L is the front or forward direction. The rear or back of the underwater planting machine 30 is the direction from the operating device 35L toward the driver seat 35S. The left and right sides of the underwater planting machine 30 are based on the front. The width direction of the underwater planting machine 30 is a direction orthogonal to the direction from the driver seat 35S toward the operating device 35L and the height direction (up and down direction) of the underwater planting machine 30.

The planting device 32 delivers the planting member 55 having the algae PT fixed thereto to dispose the algae PT on the leveled area (an example of a predetermined position on the water bottom). For example, the planting member 55 is composed of a cable (a rope such as a straw rope or a tow rope). A plurality of algae PT are arranged along the cable 55 at predetermined intervals.

For example, the cable 55 may be biodegradable. The cable 55 may be formed from vegetable fibers such as hemp fibers (e.g. hemp jute fibers). For example, the cable 55 may be formed of polylactic acid fibers. For example, the cable 55 may be formed of biodegradable resin. For example, nutrients may be added to the cable 55 to support the growth of the algae PT. For example, the configuration of the cable 55 can be changed in response to required specifications.

The underwater planting machine 30 is operated along the actual leveling line TLa and the planting device 32 is installed in the planting member along the actual leveling line TLa. Since the actual leveling line TLa is a part which is actually leveled by the underwater working device 12 of the underwater working machine 10, it is possible to reduce the deviation between the planting device 32 and the actual leveling line TLa by operating the underwater planting machine 30 along the actual leveling line TLa. Furthermore, the underwater planting machine 30 may be operated along the planting target line TL. The planting target line TL is a locus for installing the planting member. For example, the underwater planting machine 30 may be operated along the target travel line determined based on the position of the actual leveling line TLa.

In the embodiment, the underwater planting machine 30 includes three (for example, a plurality of) planting devices 32. For example, the underwater planting machine 30 may simultaneously deliver planting members to three of the plurality of ridges or grooves extending in a line shape. In the illustrated example, the underwater planting machine 30 delivers planting members onto the actual leveling line TLa of the ridges or grooves corresponding to rows R, C, and L. The underwater planting machine 30 travels along the actual leveling line TLa of the center row C among the rows R, C, and L. For example, when there are three actual leveling lines TLa, the center actual leveling line TLa may be set as the target traveling line. In this case, the underwater planting machine 30 may travel so that the center follows the target travel line. For example, the traveling mode of the underwater planting machine 30 can be changed depending on required specifications.

Three planting devices 32 are arranged side by side in the width direction W of the underwater planting machine 30. The three planting devices 32 include a center planting device 32C, a left planting device 32L, and a right planting device 32R.

The planting device 32 is attached to the planting traveling device 31 via an arm 60. For example, the planting device 32 may be attached to the vehicle body 30B (an example of the main body). The planting device 32 is provided in the planting traveling device 31 (an example of a traveling device that travels together with the planting device). The planting device 32 is disposed on the front side of the underwater planting machine 30 in the traveling direction F. The planting device 32 may be disposed on the rear side of the underwater planting machine 30 in the traveling direction F.

For example, the planting device 32 may be provided with a hydraulic cylinder 38 for moving the planting device 32 in the width direction W. For example, the main body 32B of the planting device 32 may be provided with a telescopic portion 32CP configured to expand and contract. For example, the hydraulic cylinder 38 applies a hydraulic pressure to expand and contract the telescopic portion 32CP of the planting device 32. For example, the hydraulic cylinder 38 may be provided with a direction control valve 39 for changing the direction and amount of hydraulic oil supplied to the hydraulic cylinder 38. For example, the telescopic portion 32CP may be provided with a pressure sensor 32sc that detects the hydraulic pressure of the hydraulic cylinder for expanding and contracting the telescopic portion 32CP. For example, the configuration of the planting device 32 can be changed depending on required specifications.

In the embodiment, the planting device 32 includes an accommodation portion 51 which accommodates the cable 55, a delivery portion 52 which delivers the cable 55 accommodated in the accommodation portion 51 to the water bottom, and a transmission portion 53 which transmits a driving force of the planting traveling device 31 to the delivery portion 52. The accommodation portion 51 and the delivery portion 52 are arranged on the front side of the planting traveling device 31.

The accommodation portion 51 is provided above the planting traveling device 31 in the up and down direction of the underwater planting machine 30. For example, a winding roller for winding the cable 55 may be provided inside the accommodation portion 51. For example, the configuration of the accommodation portion 51 can be changed depending on required specifications.

The delivery portion 52 is attached to the planting traveling device 31 via the arm 60. The delivery portion 52 extends downward from the lower part of the accommodation portion 51. The lower end portion of the delivery portion 52 is provided with an opening through which the cable 55 can pass. For example, the upper portion of the delivery portion 52 may constitute the main body 32B of the planting device 32. For example, the lower part of the delivery portion 52 may constitute the telescopic portion 32CP which is able to expand and contract with respect to the main body 32B of the planting device 32. For example, the configuration of the delivery portion 52 can be changed depending on required specifications.

For example, a driving roller may be provided inside the delivery portion 52 to deliver the cable 55 to the water bottom by rotating a winding roller. For example, the driving roller may be rotatable in synchronization with the drive of the planting traveling device 31. As the driving roller rotates, the cable 55 wound on the winding roller is delivered to the water bottom.

Three (for example, a plurality of) delivery portions 52 are provided at intervals in the width direction W of the underwater planting machine 30. Three delivery portions 52 are arranged side by side in the width direction W of the underwater planting machine 30. Three delivery portions 52 are provided to correspond to the center planting device 32C, the left planting device 32L, and the right planting device 32R. Three delivery portions 52 include a center delivery portion 52C, a left delivery portion 52L, and a right delivery portion 52R. The accommodation portions 51 are provided in the same number (three pieces) as the delivery portion 52. Three accommodation portions 51 are provided to correspond to the center delivery portion 52C, the left delivery portion 52L, and the right delivery portion 52R.

The planting traveling device 31 includes the pair of crawler tracks 31A. Three delivery portions 52 do not overlap the crawler track 31A when viewed from the traveling direction of the planting traveling device 31. The center delivery portion 52C of three delivery portions 52 is disposed between the pair of left and right crawler tracks 31A when viewed from the traveling direction F of the planting traveling device 31. The left delivery portion 52L is disposed on the left side of the left crawler track 31A when viewed from the traveling direction F of the planting traveling device 31. The right delivery portion 52R is disposed on the right side of the right crawler track 31A when viewed from the traveling direction F of the planting traveling device 31.

For example, the transmission portion 53 is provided inside the arm 60. For example, the transmission portion 53 may be connected to the planting traveling device 31 so that the cable 55 is delivered in synchronization with the rotation speed of the crawler track 31A or sprocket 31B. For example, when the planting traveling device 31 is turned to the left or right, the center delivery portion 52C of three delivery portions 52 may be configured such that the cable 55 is delivered in synchronization with the average number of revolutions of the left and right crawler tracks 31A or sprockets 31B. For example, the transmission portion 53 may transmit the rotational force of the sprocket 31B to the driving roller of the delivery portion 52. For example, the transmission portion 53 may include a gear train or an endless belt that is linked to the rotation of the sprocket 31B. For example, the configuration of the transmission portion 53 can be changed depending on required specifications.

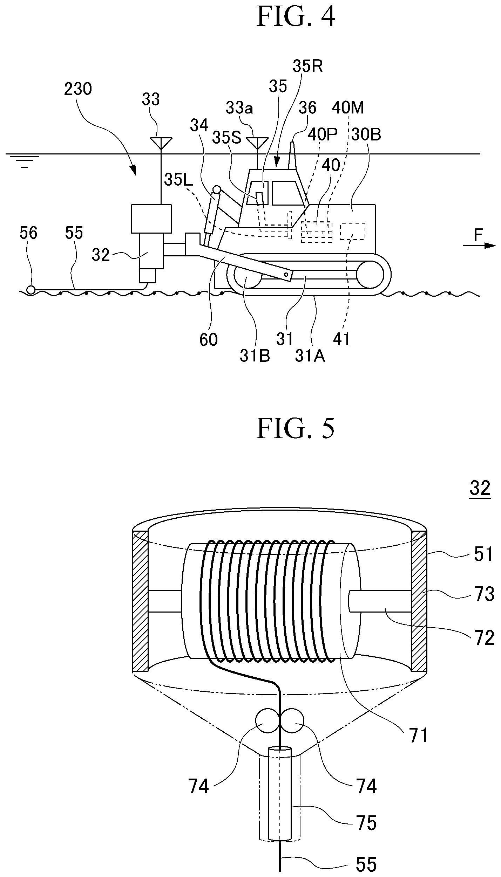

For example, the planting device 32 may include a shaft member that rotatably supports the winding roller inside the accommodation portion 51 which accommodates the cable 55. In the example of FIG. 5, a shaft member 72 fixed to a frame 73 provided inside the accommodation portion 51 is shown. In FIG. 5, the internal configuration of the accommodation portion 51 is indicated by a solid line. For example, both end portions of the protruding portion of the shaft member 72 that passes through the winding roller 71 may be fixed to the frame 73. For example, the winding roller 71 may have a bearing or a bush (an example of a bearing) therein. For example, the winding roller 71 may rotate in accordance with the travel of the planting traveling device 31. For example, when the cable 55 is pressed against the ground, the winding roller 71 may rotate due to friction between the pressed cable 55 and the ground. For example, a pair of driving rollers 74 may be provided with the cable 55 interposed therebetween. For example, one of the pair of driving rollers 74 (one driving roller) may be connected to a motor via a speed reducer (not shown). For example, the other of the pair of driving rollers 74 may rotate in conjunction with the rotation of one (driven rotation). For example, the planting device 32 may include a cylindrical guide tube 75 that guides the cable 55. Further, when the winding roller 71 rotates due to friction between the cable 55 and the ground, the driving roller 74 may not be provided. Furthermore, the configuration of the planting device 32 is not limited to the example of FIG. 5 and can be changed depending on required specifications.

The underwater planting machine 30 includes a planting device position detection antenna 33, a vehicle body position detection antenna 33a, a planting device position detector 41, and a vehicle body position detector 41a. Furthermore, the planting device position detection antenna 33, the vehicle body position detection antenna 33a, the planting device position detector 41, and the vehicle body position detector 41a are an example of a traveling position detector that detects the traveling position of the underwater planting machine 30.

The planting device position detector 41 is a device that obtains and outputs the position of the planting device 32 by the planting device position detection antenna 33. The control device 40 acquires the actual leveling line TLa from the management device 3 via the communication device 4 and a communication device 42 of the underwater planting machine 30. The control device 40 controls the hydraulic cylinder 38 based on the acquired actual leveling line TLa and the current position of the planting device 32 obtained by the planting device position detector 41. Accordingly, the position or attitude of the planting device 32 is adjusted. The current position of the planting device 32 is the position of the planting device 32 obtained by the planting device position detector 41 at the timing when the cable 55 to dispose the algae PT on the water bottom is delivered. For example, the timing at which the cable 55 is delivered is the timing at which the planting device 32 delivers the cable 55 to the leveled area while the underwater planting machine 30 travels in order to deliver the cable 55 to the leveled area.

The underwater planting machine 30 includes a hydraulic cylinder 34, the cabin 35, and a communication antenna 36. The hydraulic cylinder 34 is an actuator for raising and lowering the planting device 32. The cabin 35 is disposed above the planting traveling device 31 (on the side in the direction away from the ground plane of the planting traveling device 31).

For example, the planting traveling device 31 may be an unmanned vehicle that travels automatically using GNSS, inertial navigation, or the like. In this case, the control device 40 of the underwater planting machine 30 causes the underwater planting machine 30 to travel along the actual leveling line TLa using the position of the own vehicle obtained by GNSS or the position of the own vehicle obtained by inertial navigation. For example, the planting traveling device 31 may be configured to be able to travel by remote control.

Furthermore, the cabin 35 may be a room where the operator of the underwater planting machine 30 boards and operates the underwater planting machine 30. For example, the underwater planting machine 30 may be a manned vehicle.

The communication antenna 36 is a device for the control device 40 of the underwater planting machine 30 to communicate with the management device 3. For example, the communication antenna 36 is attached to a roof 35R of the cabin 35. Furthermore, the attachment location of the communication antenna 36 is not limited to the roof 35R and can be changed depending on required specifications.

The planting device position detection antenna 33 is a device for obtaining the position of the planting device 32 by the planting device position detector 41. The planting device position detector 41 is attached to the planting device 32. The planting device position detector 41 obtains the position of the planting device 32 by, for example, RTK-GNSS. Since the method of obtaining the position of the planting device 32 by the planting device position detection antenna 33 is the same as the method of obtaining the actual leveling position Pda by the leveling position detection antenna 13 of the underwater working machine 10, detailed description will be omitted.

For example, the planting device position detection antenna 33 is attached to the planting device 32. Accordingly, since the planting device position detection antenna 33 moves together with the planting device 32 even when the attitude of the planting device 32 changes with respect to the vehicle body 30B of the underwater planting machine 30, the planting device position detector 41 can accurately obtain the position of the planting device 32. For example, the planting device position detection antenna 33 is attached to the planting device 32C (the center planting device 32C) disposed at the center in the width direction W among three planting devices 32.

The vehicle body position detection antenna 33a is a device for obtaining the position of the vehicle body 30B of the underwater planting machine 30 by the vehicle body position detector 41a. The vehicle body position detection antenna 33a is provided in the vehicle body 30B. Since the method of obtaining the position of the vehicle body 10B by the vehicle body position detection antenna 13a is the same as the method of obtaining the actual leveling position Pda by the leveling position detection antenna 13, a detailed description will be omitted.

Furthermore, the underwater planting machine 30 may not include both the planting device position detection antenna 33 and the vehicle body position detection antenna 33a. For example, if the relative positional relationship between the position of the planting device 32 and the position of the vehicle body 30B can be detected, any one of the planting device position detection antenna 33 and the vehicle body position detection antenna 33a may be omitted. The control device 40 may obtain the position of the planting device 32 or the position of the vehicle body 30B from the position information obtained by the other of the planting device position detection antenna 33 and the vehicle body position detection antenna 33a. In this case, the position detector corresponding to the position detection antenna on the omitted side can also be omitted. The position of the planting device 32 obtained by the planting device position detector 41 and the position of the vehicle body 30B obtained by the vehicle body position detector 41a is expressed by, for example, two-dimensional information expressed in a global coordinate system, but may also be expressed by three-dimensional information.

Next, an example of a control system related to the underwater planting machine 30 will be described.

The underwater planting machine 30 includes the control device 40, the planting device position detector 41, the vehicle body position detector 41a, the communication device 42, and a display device 43. The components of the underwater planting machine 30 are connected to related components by a signal line 44. The components of the underwater planting machine 30 can exchange information with related components via the signal line 44. The signal line 44 is, for example, a signal line of an in-vehicle LAN based on a standard such as CAN.

The control device 40 includes a processing unit 40P which is a processor such as CPU, the storage unit 40M such as a RAM, a ROM, and a combination thereof, and an input/output unit 40I. The processing unit 40P controls the operation of the underwater planting machine 30. The storage unit 40M stores computer programs for realizing the functions of the processing unit 40P and information necessary for processing by the processing unit 40P. The input/output unit 40I is an interface circuit between the control device 40 and other devices.

Before the planting work by the planting device 32, the control device 40 acquires the actual leveling line TLa obtained by the leveling position detector 21 from the management device 3 via the communication device 42 and the communication antenna 36. When the planting device 32 delivers the planting member to the leveled area, the control device 40 causes the planting device position detector 41 to acquire a signal corresponding to the GNSS radio waves received by the planting device position detection antenna 33. Accordingly, the planting device position detector 41 is caused to obtain the position of the planting device position detection antenna 33. The position of the planting device position detection antenna 33 corresponds to the position of the planting device 32. The control device 40 acquires the position of the planting device position detection antenna 33 (that is, the current position of the planting device 32) obtained and output by the planting device position detector 41.

The control device 40 compares the actual leveling line TLa acquired from the management device 3 with the position of the planting device 32 obtained by the planting device position detector 41. The control device 40 moves the planting device 32 in the width direction W by operating the hydraulic cylinder 38 until the distance between the current position of the planting device 32 and the actual leveling line TLa (hereinafter, also referred to as "position difference") becomes smaller than an allowable value. The allowable value is determined based on the accuracy when planting the algae PT. The ideal allowable value is 0. When operating the hydraulic cylinder 38, the control device 40 changes the direction and amount of hydraulic oil supplied to the hydraulic cylinder 38 by controlling the direction control valve 39. Accordingly, the amount of expansion and contraction of the hydraulic cylinder 38 is adjusted.

For example, when the position difference is equal to or smaller than the allowable value, the control device 40 lowers the telescopic portion 32CP of the planting device 32. The telescopic portion 32CP is provided with the pressure sensor 32sc that detects the hydraulic pressure of the hydraulic cylinder for expanding and contracting the telescopic portion 32CP. The control device 40 acquires the hydraulic pressure of the hydraulic cylinder from the pressure sensor 32sc. The control device 40 determines that the telescopic portion 32CP has approached the leveled area when the acquired hydraulic pressure is equal to or higher than a threshold value. In this case, the control device 40 delivers the cable 55 to the leveled area by controlling the planting device 32.

The planting device position detector 41 may obtain the position of the planting device position detection antenna 33 (that is, the position of the planting member delivered by the planting device 32) after the cable 55 is delivered to the leveled area. The planting device position detector 41 may transmit the obtained position information to the management device 3 via the communication device 42 and the communication antenna 36. Hereinafter, the position where the cable 55 is delivered by the planting device 32 is also referred to as the "actual planting position". The control device 40 may store a plurality of actual planting positions in the storage unit 40M within a predetermined period. In this case, after a predetermined period of time has elapsed, the control device 40 may read out a plurality of actual planting positions all together from the storage unit 40M and transmit the actual planting positions to the management device 3 via the communication device 42 and the communication antenna 36.

The display device 43 may be provided inside the cabin 35. The display device 43 displays a guidance screen IMG2. The guidance screen IMG2 displays a deviation β between a traveling direction IG2 of the underwater planting machine 30 and the actual leveling line TLa. The actual leveling line TLa is stored in the storage unit 3M of the management device 3. The control device 40 acquires the actual leveling line TLa from the management device 3 via the communication devices 4 and 42.

For example, the underwater planting machine 30 may perform control so that the deviation β displayed on the guidance screen IMG2 becomes 0 by the automatic operation. For example, the traveling direction of the underwater planting machine 30 may be changed by automatically operating the operating device 35L of the underwater planting machine 30. For example, the display device 43 may display the planting target line TL instead of the actual leveling line TLa. In this case, the underwater planting machine 30 may perform control so that the traveling direction of the underwater planting machine 30 follows the planting target line TL by the automatic operation.

The control device 40 can obtain the traveling direction IG2 of the underwater planting machine 30 from the position of the planting device position detection antenna 33 or the vehicle body position detection antenna 33a acquired from the planting device position detector 41 or the vehicle body position detector 41a. The control device 40 obtains the traveling direction IG2 of the underwater planting machine 30 and obtains the deviation β between the traveling direction IG2 and the planting target line TL read out from the storage unit 40M. The control device 40 displays the planting target line TL, the obtained deviation β, and the traveling direction IG2 on the display device 43 as the guidance screen IMG2. For example, the display device 43 displays the actual leveling line TLa (the line along which the underwater planting machine 30 travels) of the center row C among the rows R, C, and L where the algae PT is to be planted as the actual leveling line TLa of the guidance screen IMG2.

### <Example of cable installation>

The control device 40 controls the underwater planting machine 30 based on the planting target position of the cable 55 (for example, a predetermined position of the planting target location) obtained from the management device 3. The control device 40 controls the planting device 32 based on the planting target position of the cable 55 acquired from the management device 3 and the traveling position obtained by the traveling position detector (for example, the planting device position detector 41 and the like). For example, the planting device 32 may be configured to be movable in the width direction W. For example, the control device 40 may control the position of the planting device 32 in the width direction W. Accordingly, the position where the cable 55 is installed on the water bottom may be adjusted. The control device 40 controls the planting device 32 so that the cable 55 is installed while the planting traveling device 31 is traveling.

The management device 3 stores the planting target line TL which is a locus for installing the cable 55 having the algae PT fixed thereto to dispose the algae PT on the water bottom as the planting position of the cable 55. For example, the planting target line TL is a line which is thinner than the actual leveling line TLa having a predetermined width. The control device 40 controls the planting device 32 so that the cable 55 is installed along the planting target line TL acquired from the management device 3. The control device 40 controls the planting device 32 so that the cable 55 is installed on the water bottom leveled by the underwater working device 12 (leveled area).

For example, the control device 40 may control the timing at which the planting device 32 first delivers the cable 55 based on the GNSS radio waves received by the planting device position detection antenna 33. For example, after determining the starting point at which the cable 55 is to be installed, the control device 40 may deliver the cable 55 by rotationally driving the driving roller of the delivery portion 52.

For example, a weight 56 having a higher specific gravity than the cable 55 may be attached to the starting end (an example of an end) of the cable 55. Accordingly, the starting end of the cable 55 can be positioned at a predetermined position on the water bottom. For example, the weight 56 may be a rock, an iron ball, or the like. For example, the configuration of the weight 56 can be changed depending on required specifications.

For example, the starting end (at least one example) of the cable 55 may be fixed to the water bottom by a fixing member. For example, the fixing member may be an inverted U-shaped nail or the like. For example, the underwater planting machine 30 may include a cable fixing mechanism that delivers a fixing member to the water bottom in order to fix at least a part of the cable 55 to the water bottom. For example, the method of fixing the cable 55 can be changed depending on required specifications.

For example, the control device 40 may reset the starting point for installing the cable 55. For example, the control device 40 may control the planting device 32 so that the delivery of the cable 55 is started when a start button is pressed from a remote location. Accordingly, the delivery starting position of the cable 55 can be determined in real time. For example, the control device 40 may control the planting device 32 so that the delivery of the cable 55 is stopped when an end button is pressed from a remote location. Accordingly, the delivery ending position of the cable 55 can be determined in real time.

For example, the end of the cable 55 (an example of at least a part) may be cut at the delivery ending position of the cable 55. For example, the underwater planting machine 30 may include a cutting mechanism for cutting the cable 55 in order to cut at least a part of the cable 55. For example, the control device 40 may control the cutting mechanism so that the cable 55 is cut when an end button is pressed from a remote location. For example, the method of cutting the cable 55 can be changed depending on required specifications. For example, the end of the cable 55 (an example of an end portion) may be configured to have a weight attached thereto in the same manner as the start end.

For example, the middle part of the cable 55 (at least one example of a part of the cable 55) may be sandwiched by the bank during a period from when the delivery of the cable 55 is started to when the delivery is finished. Accordingly, it is possible to suppress the cable 55 from shifting from a predetermined position on the water bottom. For example, the underwater planting machine 30 may include a bank forming mechanism for forming a bank on the side of the cable 55 in order to sandwich at least a part of the cable 55 in the bank. For example, the end of the cable 55 (at least one example) may be covered with soil. For example, the cable 55 may be buried by providing the underwater planting machine 30 with a structure such as a blade or ripper for digging up the soil at the water bottom at the rear of the planting device so that soil at the water bottom can be poured from above the cable 55 after disposing the cable 55 at a predetermined position on the water bottom. For example, the method of positioning the cable 55 can be changed depending on required specifications.

### <Operation and effect>

As described above, the underwater planting machine 30 of this embodiment includes the vehicle body 30B, the planting device 32 which delivers the planting member 55 having the algae PT fixed thereto to dispose the algae PT at a predetermined position on the water bottom, the planting traveling device 31 which causes the vehicle body 30 and the planting device 32 to travel, and a power source which drives the planting traveling device 31. The planting device 32 moves using the planting traveling device 31 while delivering the planting member 55 so that the planting member 55 is disposed at a predetermined position on the water bottom.

According to this configuration, the planting member 55 can be installed on the water bottom by the planting device 32. Therefore, the planting member 55 having the algae PT fixed thereto does not need to be manually installed by a worker. Thus, the algae PT can be placed on the water bottom without any effort on the worker.

In addition, since the planting member 55 is installed while the planting traveling device 31 is traveling, the planting member 55 can be smoothly installed on the water bottom in accordance with the traveling of the underwater planting machine 30. Thus, when mechanizing planting work on a large area of land, the installation work of the planting members 55 can be improved more efficiently.

In this embodiment, the planting device 32 is disposed on the front side of the planting traveling device 31 in the traveling direction.

According to this configuration, the planting member 55 can be installed from the front side of the planting traveling device 31 in the traveling direction. Therefore, it is suitable for performing positioning work or the like after the planting member 55 is installed.

In this embodiment, the planting member 55 is composed of a cable.

According to this configuration, since the cable 55 can be installed in a line on the water bottom, it is suitable for installing the planting member 55 at a predetermined planting target line TL.

In this embodiment, a plurality of algae PT are arranged at predetermined intervals along the cable 55.

According to this configuration, the plurality of algae PT are arranged at predetermined intervals on the water bottom by installing the cable 55 on the water bottom. Therefore, the plurality of algae PT can grow at a predetermined position on the water bottom.

In this embodiment, the underwater planting machine 30 buries the cable 55 by disposing the cable 55 at a predetermined position on the water bottom and pouring soil from the water bottom over the cable 55.

According to this configuration, it is possible to suppress the cable 55 from shifting from the predetermined position on the water bottom.

In this embodiment, the planting device 32 includes the accommodation portion 51 which accommodates the cable 55 and the delivery portion 52 which delivers the cable 55 accommodated in the accommodation portion 51 to the water bottom.

According to this configuration, the cable 55 accommodated in the accommodation portion 51 can be delivered to the water bottom by the delivery portion 52. Thus, the cable 55 can be smoothly installed on the water bottom.

In this embodiment, the delivery portion 52 is provided at a plurality of positions at intervals in the width direction W of the underwater planting machine 30.

According to this configuration, since the cable 55 can be delivered to the water bottom by the plurality of delivery portions 52, it is suitable to install the cable 55 along the plurality of planting target lines TL.

In this embodiment, the planting traveling device 31 includes the pair of crawler tracks 31A. The plurality of delivery portions 52 do not overlap the crawler tracks 31A when viewed from the traveling direction F of the planting traveling device 31.

According to this configuration, it is possible to suppress the cable 55 delivered from the delivery portion 52 from disturbing the traveling of the crawler track 31A. Thus, the cable 55 can be smoothly installed on the water bottom while the underwater planting machine 30 is made to travel smoothly.

In this embodiment, the planting device 32 further includes the transmission portion 53 which transmits the driving force of the planting traveling device 31 to the delivery portion 52.

According to this configuration, since the delivery operation of the delivery portion 52 can be linked to the driving of the planting traveling device 31, it is suitable to install the cable 55 while the planting traveling device 31 is traveling.

Furthermore, the planting device 32 is not limited to the configuration including the transmission portion 53. For example, the rope accommodated in the accommodation portion may be delivered to the water bottom without the driving force of the planting traveling device. For example, a roller may be provided at the lower part of the delivery portion to automatically deliver the rope by friction between the rope that has been delivered and installed on the ground (water bottom) and the ground.

In this embodiment, the underwater planting system 1 includes the underwater planting machine 30, the management device 3 which manages the planting target position of the planting member 55, and the control device 40 which controls the underwater planting machine 30 based on the planting target position of the planting member 55 acquired from the management device 3.

According to this configuration, the planting work efficiency can be improved when mechanizing planting work on a large area of land.

In this embodiment, the underwater planting system 1 further includes the traveling position detector (for example, the planting device position detector 41 or the like) which detects the traveling position of the underwater planting machine 30. The control device 40 controls the planting device 32 based on the planting target position of the planting member 55 acquired from the management device 3 and the traveling position obtained by the traveling position detector.

According to this configuration, the installation work efficiency of the planting member 55 can be improved when mechanizing planting work on a large area of land.

In this embodiment, the management device 3 stores the planting target line TL which is a locus for installing the planting member 55 having the algae PT fixed thereto to dispose the algae PT on the water bottom as the planting target position of the planting member 55. The control device 40 controls the planting device 32 so that the planting member 55 is installed along the planting target line TL acquired from the management device 3.

According to this configuration, the planting member 55 can be smoothly installed along the planting target line TL acquired from the management device 3. Thus, the installation work efficiency of the planting member 55 can be improved when mechanizing planting work on a large area of land.

In this embodiment, the underwater planting system 1 further includes the underwater working device 12 which levels the water bottom. The control device 40 controls the planting device 32 so that the planting member 55 is installed on the water bottom leveled by the underwater working device 12.

According to this configuration, the planting member 55 can be smoothly installed on the water bottom leveled by the underwater working device 12. Thus, the installation work efficiency of the planting member 55 can be improved when mechanizing planting work on a large area of land.

In this embodiment, an underwater planting method includes: generating a planting target position which is a target position of the algae or aquatic plants to be planted on a water bottom; generating a target traveling position which is used for the underwater planting machine 30 delivering the planting member 55 having the algae PT fixed thereto to dispose the algae PT at a predetermined position on the water bottom and is determined based on the planting target position; causing the underwater planting machine 30 to travel based on the target traveling position; and disposing the planting member 55 at a predetermined position on the water bottom by delivering the planting member 55 while the underwater planting machine 30 is traveling.

According to this method, the planting member 55 having the algae PT fixed thereto does not need to be manually installed by the worker. Thus, the algae PT can be planted on the water bottom without any effort on the worker.

### <Second embodiment>

In the first embodiment, an example in which the planting device 32 is disposed on the front side of the planting traveling device 31 in the traveling direction (see FIG. 2) has been described. As shown in FIG. 4, the second embodiment is different from the first embodiment in that the planting device 32 is disposed on the rear side of the planting traveling device 31 in the traveling direction. In the following description, the same components as in the first embodiment are indicated by the same reference numerals, and the description thereof will be omitted.

FIG. 4 is a schematic view of an underwater planting machine 230 according to the second embodiment.

As shown in FIG. 4, the planting device 32 is disposed on the rear side of the planting traveling device 31 in the traveling direction F. The accommodation portion 51 and the delivery portion 52 of the planting device 32 are arranged on the rear side of the vehicle body 30B of the underwater planting machine 30. The delivery portion 52 is attached to the planting traveling device 31 via the arm 60.

### <Operation and effect>

In the second embodiment, the planting device 32 is disposed on the rear side of the planting traveling device 31 in the traveling direction.

According to this configuration, the planting member 55 can be installed from the rear side of the planting traveling device 31 in the traveling direction. Therefore, it is suitable for performing positioning work or the like before the planting member 55 is installed. For example, when the planting device 32 is located at the rear of the vehicle, it is not necessary to divide the planting device 32 into three as in the first embodiment. This is because the planting device 32 does not overlap the crawler track at the rear of the crawler track. That is, wide planting members such as nets and sheets can be disposed without worrying about the crawler tracks. Accordingly, the algae can be planted widely. In addition, since the planting device 32 is reduced to one, costs can be reduced. Furthermore, the algae may be arranged at predetermined intervals not only in the longitudinal direction but also in the width direction by installing a net or sheet.

### <Other embodiments>

In the above-described embodiments, although an example has been described in which the water bottom is the sea bottom and the algae is seaweed such as kelp or wakame, the present invention is not limited thereto. For example, the water bottom may be the river bottom. For example, the algae may grow in rivers. For example, the algae may be different depending on the water quality of the water bottom on which the planting members are installed. For example, seagrass such as eelgrass (an example of an aquatic plant) may be planted at a predetermined position on the water bottom. For example, the appearance of the water bottom, algae and aquatic plants can be changed depending on required specifications.

In the above-described embodiments, an example has been described in which the planting member is composed of a cable, the present invention is not limited thereto. For example, the planting member may not be composed of a cable. For example, the planting member may be made of a net or a sheet. For example, the configuration of the planting member can be changed depending on required specifications.

In the above-described embodiments, an example has been described in which the delivery portion is provided at a plurality of positions at intervals in the width direction of the underwater planting machine, but the present invention is not limited thereto. For example, the delivery portion may not be provided at a plurality of positions at intervals in the width direction of the underwater planting machine. For example, the delivery portion may deliver a net on which a plurality of algae are arranged at predetermined intervals over a wide area on the water bottom. For example, the method of installing the delivery portion can be changed depending on required specifications.

In the above-described embodiments, an example has been described in which the control device controls the underwater planting machine based on the planting target position of the planting member acquired from the management device, but the present invention is not limited thereto. For example, the control device may not control the underwater planting machine based on the planting target position of the planting member acquired from the management device. For example, the underwater planting machine may travel based on an underwater map showing the target planting positions of the planting members. For example, the control mode of the underwater planting machine can be changed depending on required specifications.

In the above-described embodiments, an example has been described in which the underwater planting system includes the underwater working machine which levels the water bottom, but the present invention is not limited thereto. For example, the underwater planting system may not include the underwater working machine. For example, the underwater planting system may include at least underwater planting machine described above. For example, the configuration of the underwater planting system can be changed depending on required specifications.

In the above-described embodiments, the coordinate system of the actual leveling position, the actual leveling line, and the planting target line is the global coordinate system, but is not limited thereto. For example, the coordinate system of the actual leveling position, the actual leveling line, and the planting target line may be a coordinate system independently set in the planting area. For example, the coordinate system of the actual leveling position, the actual leveling line, and the planting target line can be changed depending on required specification.

### (Appendix 1)

An underwater planting machine including:
a main body;
a planting device which installs a planting member having algae or aquatic plants fixed thereto to dispose the algae or aquatic plants at a predetermined position on a water bottom;
a traveling device which causes the main body and the planting device to travel; and
a power source which drives the traveling device,
wherein the planting device disposes the planting member at a predetermined position on the water bottom while being moved by the traveling device.

### (Appendix 2)

The underwater planting machine according to Appendix 1,
wherein the planting device is disposed on the front side of the traveling device in the traveling direction.

### (Appendix 3)

The underwater planting machine according to Appendix 1,
wherein the planting device is disposed on the rear side of the traveling device in the traveling direction.

### (Appendix 4)

The underwater planting machine according to any one of Appendix 1 to 3,
wherein the planting member is composed of a cable.

### (Appendix 5)

The underwater planting machine according to any one of Appendix 1 to 4,
wherein the algae or aquatic plants are arranged at a plurality of positions at predetermined intervals along the cable.

### (Appendix 6)

The underwater planting machine according to any one of Appendix 1 to 5,
wherein the planting member is buried by pouring soil of the water bottom from above the planting member after disposing the planting member at a predetermined position on the water bottom.

### (Appendix 7)

The underwater planting machine according to Appendix 4 or 5,
wherein the planting device includes an accommodation portion which accommodates the cable and a delivery portion which delivers the cable accommodated in the accommodation portion to the water bottom.

### (Appendix 8)

The underwater planting machine according to Appendix 7,
wherein the delivery portion is provided at a plurality of positions at intervals in a width direction of the traveling device.

### (Appendix 9)

The underwater planting machine according to Appendix 8,
wherein the traveling device includes a pair of crawler tracks, and
wherein the plurality of delivery portions do not overlap the crawler tracks when viewed from a traveling direction of the traveling device.

### (Appendix 10)

The underwater planting machine according to any one of Appendix 7 to 9,
wherein the planting device further includes a transmission portion which transmits a driving force of the traveling device to the delivery portion.

### (Appendix 11)

An underwater planting system including:
an underwater planting machine which includes a main body, a planting device installing a planting member having algae or aquatic plants fixed thereto to dispose the algae or aquatic plants at a predetermined position on a water bottom, a traveling device causing the main body and the planting device to travel, and a power source driving the traveling device, the planting device being configured to dispose the planting member at a predetermined position on the water bottom while being moved by the traveling device;
a management device which manages a planting target position; and
a control device which controls the underwater planting machine based on the planting target position acquired from the management device.

### (Appendix 12)

The underwater planting system according to Appendix 11, further including:
a traveling position detector which detects a traveling position of the underwater planting machine,
wherein the control device controls the planting device based on the planting target position acquired from the management device and the traveling position obtained by the traveling position detector.

### (Appendix 13)

The underwater planting system according to Appendix 11 or 12,
wherein the management device stores a planting target line which is a locus for installing the planting member as the planting target position, and
wherein the control device controls the planting device so that the planting member is installed along the planting target line acquired from the management device.

### (Appendix 14)

The underwater planting system according to any one of Appendix 11 to 13, further including:
an underwater working device which levels the water bottom,
wherein the control device controls the planting device so that the planting member is installed on the water bottom leveled by the underwater working device.

Although the embodiments of the present invention have been described above, the present invention is not limited to thereto, and additions, omissions, substitutions, and other modifications of the configuration can be made within the scope that does not deviate from the spirit of the present invention, and the above-described embodiments can be combined as appropriate.

### BRIEF DESCRIPTION OF THE REFERENCE SYMBOLS

1 Underwater planting system
3 Management device
12 Underwater working device
30 Underwater planting machine
30B Vehicle body (main body)
31 Planting traveling device (traveling device)
31A Crawler track
32 Planting device
33 Planting device position detection antenna (traveling position detector)
33a Vehicle body position detection antenna (traveling position detector)
40 Control device
41 Planting device position detector (traveling position detector)
41a Vehicle body position detector (traveling position detector)
51 Accommodation portion
52 Delivery portion
53 Transmission portion
55 Cable
230 Underwater planting machine
PT Algae
TL Planting target line
TLa Actual leveling line
W Width direction

## Claims

1. An underwater planting machine comprising:
a main body;
a planting device which installs a planting member having algae or aquatic plants fixed thereto to dispose the algae or aquatic plants at a predetermined position on a water bottom;
a traveling device which causes the main body and the planting device to travel; and
a power source which drives the traveling device,
wherein the planting device disposes the planting member at a predetermined position on the water bottom while being moved by the traveling device.

2. The underwater planting machine according to claim 1,
wherein the planting device is disposed on the front side of the traveling device in the traveling direction.

3. The underwater planting machine according to claim 1,
wherein the planting device is disposed on the rear side of the traveling device in the traveling direction.

4. The underwater planting machine according to any one of claims 1 to 3,
wherein the planting member is composed of a cable.

5. The underwater planting machine according to claim 4,
wherein the algae or aquatic plants are arranged at a plurality of positions at predetermined intervals along the cable.

6. The underwater planting machine according to any one of claims 1 to 3,
wherein the planting member is buried by pouring soil of the water bottom from above the planting member after disposing the planting member at a predetermined position on the water bottom.

7. The underwater planting machine according to claim 5,
wherein the planting device includes an accommodation portion which accommodates the cable and a delivery portion which delivers the cable accommodated in the accommodation portion to the water bottom.

8. The underwater planting machine according to claim 7,
wherein the delivery portion is provided at a plurality of positions at intervals in a width direction of the traveling device.

9. The underwater planting machine according to claim 8,
wherein the traveling device includes a pair of crawler tracks, and
wherein the plurality of delivery portions do not overlap the crawler tracks when viewed from a traveling direction of the traveling device.

10. The underwater planting machine according to claim 7,
wherein the planting device further includes a transmission portion which transmits a driving force of the traveling device to the delivery portion.

11. An underwater planting system comprising:
an underwater planting machine which includes a main body, a planting device installing a planting member having algae or aquatic plants fixed thereto to dispose the algae or aquatic plants at a predetermined position on a water bottom, a traveling device causing the main body and the planting device to travel, and a power source driving the traveling device, the planting device being configured to dispose the planting member at a predetermined position on the water bottom while being moved by the traveling device;
a management device which manages a planting target position; and
a control device which controls the underwater planting machine based on the planting target position acquired from the management device.

12. The underwater planting system according to claim 11, further comprising:
a traveling position detector which detects a traveling position of the underwater planting machine,
wherein the control device controls the planting device based on the planting target position acquired from the management device and the traveling position obtained by the traveling position detector.

13. The underwater planting system according to claim 11 or 12,
wherein the management device stores a planting target line which is a locus for installing the planting member as the planting target position, and
wherein the control device controls the planting device so that the planting member is installed along the planting target line acquired from the management device.

14. The underwater planting system according to claim 11 or 12, further comprising:
an underwater working device which levels the water bottom,
wherein the control device controls the planting device so that the planting member is installed on the water bottom leveled by the underwater working device.

15. An underwater planting method comprising:
generating a planting target position which is a target position of algae or aquatic plants to be planted on a water bottom;
generating a target traveling position which is used for an underwater planting machine disposing a planting member having algae or aquatic plants fixed thereto to dispose the algae or aquatic plants at a predetermined position on the water bottom and is determined based on the planting target position;
causing the underwater planting machine to travel based on the target traveling position; and
disposing the planting member at a predetermined position on the water bottom while the underwater planting machine is traveling.
